(19) Europäisches Patentamt
European Patent Office
Office européen des brevets

(11) EP 4 274 314 A1

(12) EUROPEAN PATENT APPLICATION
published in accordance with Art. 153(4) EPC

(43) Date of publication:
08.11.2023 Bulletin 2023/45

(51) International Patent Classification (IPC):
H04W 52/02 (2009.01)    H04W 68/00 (2009.01)

(21) Application number: 21923772.4

(22) Date of filing: 05.02.2021

(52) Cooperative Patent Classification (CPC):
H04W 52/02; H04W 68/00

(86) International application number:
PCT/CN2021/075552

(87) International publication number:
WO 2022/165756 (11.08.2022 Gazette 2022/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventor: HE, Chuanfeng
Dongguan, Guangdong 523860 (CN)

(74) Representative: Novagraaf Technologies
Bâtiment O2
2, rue Sarah Bernhardt
CS90017
92665 Asnières-sur-Seine Cedex (FR)

(54) **ENERGY-SAVING INFORMATION DETERMINATION METHOD, ELECTRONIC DEVICE, AND STORAGE MEDIUM**

(57)     The present application discloses an energy-saving information determination method, comprising: a terminal device determines, according to at least one of the following items, the size of a bit domain for indicating energy-saving information in downlink control information: terminal device grouping information corresponding to the energy-saving information, information of a paging occasion corresponding to the energy-saving information, and first configuration information sent by a network device. The present application further discloses the other energy-saving information determination method, an electronic device and a storage medium.

A terminal device determines a size of bit fields for indicating power-saving information in downlink control information based on at least one of: information of terminal device groups corresponding to the power-saving information, information of paging occasions corresponding to the power-saving information, or first configuration information transmitted by a network device — S201

The terminal device determines a position of the power-saving information in the downlink control information — S202

**FIG. 7**

**Description**

TECHNICAL FIELD

The disclosure relates to the technical field of wireless communication, and more particularly to a method for determining power-saving information, an electronic device and a storage medium.

BACKGROUND

With the introduction of power saving in user equipment (UE), how to further implement the power saving of the UE is a goal that is pursuing.

SUMMARY

Embodiments of the disclosure provide methods for determining power-saving information, an electronic device and a storage medium. A terminal device is able to determine a size of bit fields for indicating power-saving information to enable the power-saving of the terminal device.

In a first aspect, an embodiment of the present disclosure provides a method for determining power-saving information. The method includes the following operation. A terminal device determines a size of bit fields for indicating power-saving information in downlink control information based on at least one of: information of terminal device groups corresponding to the power-saving information; information of paging occasions corresponding to the power-saving information; or first configuration information transmitted by a network device.

In a second aspect, an embodiment of the present disclosure provides a method for determining power-saving information. The method includes the following operation. A network device transmits second information for a terminal device to determine a size of bit fields for indicating power-saving information in downlink control information to the terminal device. The second information includes at least one of: information of terminal device groups corresponding to the power-saving information; information of paging occasions corresponding to the power-saving information; or first configuration information.

In a third aspect, an embodiment of the present disclosure provides a terminal device including a processing unit. The processing unit is configured to determine a size of bit fields for indicating power-saving information in downlink control information based on at least one of: information of terminal device groups corresponding to the power-saving information; information of paging occasions corresponding to the power-saving information; or first configuration information sent by a network device.

In a fourth aspect, an embodiment of the present disclosure provides a network device including a transmitting unit. The transmitting unit is configured to transmit second information for a terminal device to determine a size of bit fields for indicating power-saving information in downlink control information to the terminal device. The second information includes at least one of: information of terminal device groups corresponding to the power-saving information; information of paging occasions corresponding to the power-saving information; or first configuration information.

In a fifth aspect, an embodiment of the present disclosure provides a terminal device including a processor and a memory for storing a computer program capable of running on the processor. The processor is configured to perform the operations of the method for determining power-saving information performed by the terminal device when running the computer program.

In a sixth aspect, an embodiment of the present disclosure provides a network device including a processor and a memory for storing a computer program capable of running on the processor. The processor is configured to perform the operations of the method for determining power-saving information performed by the network device when running the computer program.

In a seventh aspect, an embodiment of the present disclosure provides a chip including a processor. The processor is configured to call and run a computer program from a memory, to cause a device on which the chip is installed to perform the method for determining power-saving information performed by the terminal device.

In an eighth aspect, an embodiment of the present disclosure provides a chip including a processor. The processor is configured to call and run a computer program from a memory, to cause a device on which the chip is installed to perform the method for determining power-saving information performed by the network device.

In a ninth aspect, an embodiment of the present disclosure provides a storage medium having stored an executable program that, when executed by a processor, causes the processor to perform the method for determining power-saving information performed by the terminal device.

In a tenth aspect, an embodiment of the present disclosure provides a storage medium having stored an executable program that, when executed by a processor, causes the processor to perform the method for determining power-saving information performed by the network device.

In an eleventh aspect, an embodiment of the present disclosure provides a computer program product including computer program instructions, which cause a computer to perform the method for determining power-saving information performed by the terminal device.

In an twelfth aspect, an embodiment of the present disclosure provides a computer program product including computer program instructions, which cause a computer to perform the method for determining power-saving information performed by the network device.

In a thirteenth aspect, an embodiment of the present disclosure provides a computer program causing a computer to perform the method for determining power-saving information performed by the terminal device.

In a fourteenth aspect, an embodiment of the present disclosure provides a computer program causing a computer to perform the method for determining power-saving information by the network device.

BRIEF DESCRIPTION OF THE DRAWINGS

FIG. 1 is a schematic diagram of indicating whether a terminal device monitors a PDCCH at a DRX On Duration through a power-saving signal according to an embodiment of the present disclosure.

FIG. 2 is a schematic diagram of a power-saving signal carrying power-saving indication information of multiple terminal devices according to an embodiment of the present disclosure.

FIG. 3 is a schematic diagram of a monitoring occasion for the terminal device to monitor the power-saving signal according to an embodiment of the present disclosure.

FIG. 4 is a schematic diagram of the position of paging frame (PF) and paging occasion (PO) in a DRX cycle according to an embodiment of the present disclosure.

FIG. 5 is a schematic diagram of indicating a terminal device or a terminal device subgroup to monitor a PDCCH at a PO or a PF through a power-saving signal according to an embodiment of the present disclosure.

FIG. 6 is a schematic diagram of the composition structure of the communication system provided by an embodiment of the present disclosure.

FIG. 7 is a schematic diagram of an alternative process flow of the method for determining power-saving information provided by an embodiment of the present disclosure.

FIG. 8 is a schematic diagram of N terminal device groups corresponding to the power-saving information provided by an embodiment of the present disclosure.

FIG. 9 is a schematic diagram of indicating a terminal device not to detect paging messages at multiple paging occasions or paging frames through the power-saving information provided by an embodiment of the present disclosure.

FIG. 10 is a schematic diagram of indicating whether a terminal device group detects paging messages at a paging occasion group through a bit field provided by an embodiment of the present disclosure.

FIG. 11 is a schematic diagram of indicating whether multiple terminal device groups detect paging messages at multiple paging occasions through the power-saving information provided by an embodiment of the present disclosure.

FIG. 12 is a schematic diagram of another alternative process flow of the method for determining power-saving information provided by an embodiment of the present disclosure.

FIG. 13 is a schematic diagram of an alternative composition structure of a terminal device provided by an embodiment of the present disclosure.

FIG. 14 is a schematic diagram of an alternative composition structure of a network device provided by an embodiment of the present disclosure.

FIG. 15 is a schematic diagram of a hardware composition structure of an electronic device provided by an embodiment of the present disclosure.

DETAILED DESCRIPTION

In order to enable a more detailed understanding of the features and technical content of the embodiments of the present disclosure, the implementation of the embodiments of the present disclosure will be described in detail below in conjunction with the accompanying drawings, which are provided for illustration only, and are not intended to limit the embodiments of the present disclosure.

A brief description of the relevant elements is provided before describing the embodiments of the present disclosure.

In order to save the energy consumption of a terminal device, both long term evolution (LTE) system and new radio (NR) system have a discontinuous reception (DRX) mechanism, which allows the terminal device enter a discontinuous receiving state instead of having to keep the receiver on all the time in a case that no data is received, thus achieving saving power for the terminal device. The DRX mechanism includes that configuring a DRX cycle for a terminal in a radio resource control connected (RRC_CONNECTED) state, and a DRX cycle consists of an On Duration and an Opportunity for DRX. During the DRX On Duration, the terminal device monitors and receives downlink channels and signals including a physical downlink control channel (PDCCH). During the "Opportunity for DRX" time, the terminal device does not receive downlink channels (such as PDCCH) and signals in order to reduce power consumption. The terminal device in a radio resource control idle (RRC_IDLE) state needs to receive paging messages in a similar way with the DRX, and a paging occasion (PO) exists in a DRX cycle. The terminal device only receives paging messages at the PO, and does not receive paging messages outside the PO, so as to achieve the purpose of saving power. The terminal device determines whether a paging message exits at the PO by detecting a PDCCH signal scrambled by a paging radio network temporary identity (P-RNTI).

In the evolution of the NR system, higher requirements are put forward for the power saving of the terminal device. For example, for the existing DRX mechanism, during each On Duration, the terminal device needs to constantly detect the PDCCH to determine whether the network device schedules a data transmission to the terminal device. However, for most terminal devices, there may be no need to receive the data transmission for a long time, but it is still necessary to maintain a regular wake-up mechanism to monitor possible downlink transmission, so a space for further optimization of power saving for such terminal device exists. The same is true for terminal devices in the RRC_IDLE state to receive paging messages.

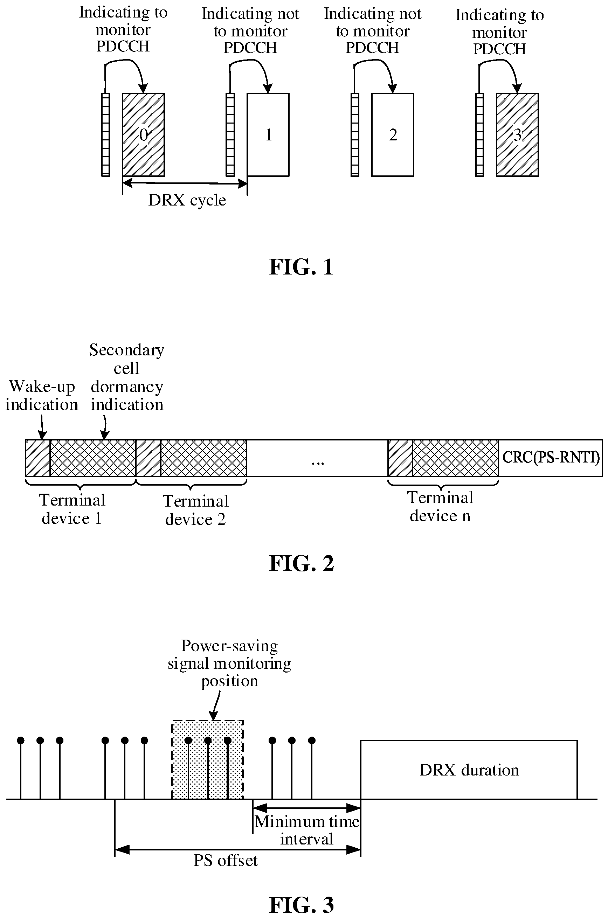

In version (R16), a power-saving signal is introduced to further implement a power saving of a terminal device. The power-saving signal is used in conjunction with the DRX mechanism, and the terminal device receives an indication of a power-saving wake-up signal before the DRX ON Duration. The power-saving wake-up signal "wakes up" the terminal device to monitor the PDCCH during the DRX On Duration when the terminal device has a data transmission during a DRX cycle. Otherwise, the power-saving wake-up signal does not "wake up" the terminal device when the terminal device has no data transmission during a DRX cycle, and the terminal device does not need to monitor the PDCCH during the DRX On Duration. Compared with the existing DRX mechanism, when the terminal device has no data transmission, the PDCCH monitoring for the terminal device during the DRX On Duration can be omitted, thus realizing power-saving for the terminal device. The time during which the terminal device is out of the DRX On Duration is referred to as an inactive time, and the time during which the terminal device is in the DRX On Duration is referred to as an active time. The process of indicating whether a terminal device monitors a PDCCH at a DRX On Duration through a power-saving signal, is illustrated in FIG. 1. If a PDCCH monitoring is indicated by the power-saving signal, the PDCCH is monitored during the DRX cycle. If no PDCCH monitoring is indicated by the power-saving signal, the PDCCH is not monitored during the DRX cycle.

In R16, the power-saving signal is carried by a newly defined DCI format 2_6. A network device configures a terminal device to detect a search space set of a PDCCH carrying the DCI format 2_6. In the power-saving signal, the maximum number of bits required by each terminal device is 6 which includes 1 wake-up indication bit and up to 5 secondary cell dormancy indication bits. The power-saving signal may carry indication bits of multiple terminal devices to improve the use efficiency of resources in the system. The power-saving signal carrying power-saving indication information of multiple terminal devices is illustrated in FIG. 2, the network device notifies a starting position of bits of the power-saving indication information of each terminal device in DCI, and the number of the bits of each terminal device can be implicitly obtained by the number of configured secondary cell (carrier) groups. Herein, the number of the wake-up indication bit(s) must not be zero, and the number of the secondary cell (carrier) dormancy indication bit(s) can be 0. Further, the network device may notify the terminal device of a total number of bits of the DCI and a PS-RNTI for scrambling the PDCCH.

The power-saving signal is monitored during a complete PDCCH search space cycle (defined by a parameter "duration" of a PDCCH search space), and the position of the monitored power-saving signal is located before a time period corresponding to a minimum time interval. As illustrated in FIG. 3 below, the terminal device monitors a monitoring occasion of the power-saving signal which is indicated by a dashed box.

In an NR system, a network device may transmit a paging to a terminal device in an idle state or in a connected state. The paging process may be triggered by a core network or by the network device, to transmit a paging request to the terminal device in the idle state, or to notify system information modification, or to notify the terminal device to receive one or more of: earthquake and tsunami warning system (ETWS), commercial mobile alert system (CMAS) or other information. After receiving the paging message of the core network, the network device analyzes the contents thereof, to obtain a tracking area identity (TAI) list of the terminal device, and perform air interface paging in a cell belonging to the tracking area in the TAI list. A core network field of a paging message is not decoded by the network device, but is transparently transmitted to the terminal device. After receiving the paging message transmitted by the core network, the network device summarizes paging messages of terminal devices with a same PO into one paging message, and transmits it to the related terminal devices through a paging channel. By receiving paging parameters through system information, the terminal device can determine positions of common paging frames and paging occasions of the cell, and calculate positions of paging frames and paging occasions of the terminal device in combination with its own terminal device identification (UE_ID), and receives a paging message at a corresponding time. The paging message is carried by a physical downlink shared channel (PDSCH), and the terminal device obtains paging indication information by detecting the PDCCH scrambled by the P-RNTI, thereby receiving the paging message. The terminal device in the idle state will save power by way of the DRX, and the terminal device will obtain related information of the DRX from SIB2. The paging message is received by monitoring the PDCCH scrambled by the P-RNTI at a PO at a PF in a DRX cycle.

The PF denotes a system frame number where the paging message appears, and the PO denotes an occasion when the paging message may appear. A PF may include one or more POs, and the terminal device only needs to monitor its own PO during each DRX cycle or paging cycle. A system frame number (SFN) that satisfies the following formula of the PF can be used as a PF.

The SFN of one PF is determined by the following formula:

$$(SFN + PF\_offset)\ mod\ T = (T\ div\ N) * (UE\_ID\ mod\ N) \qquad (1)$$

The number Index_ (i_s) of the PO within one PF is determined by the following formula:

$$i\_s = floor\ (UE\_ID/N)\ mod\ Ns \qquad (2)$$

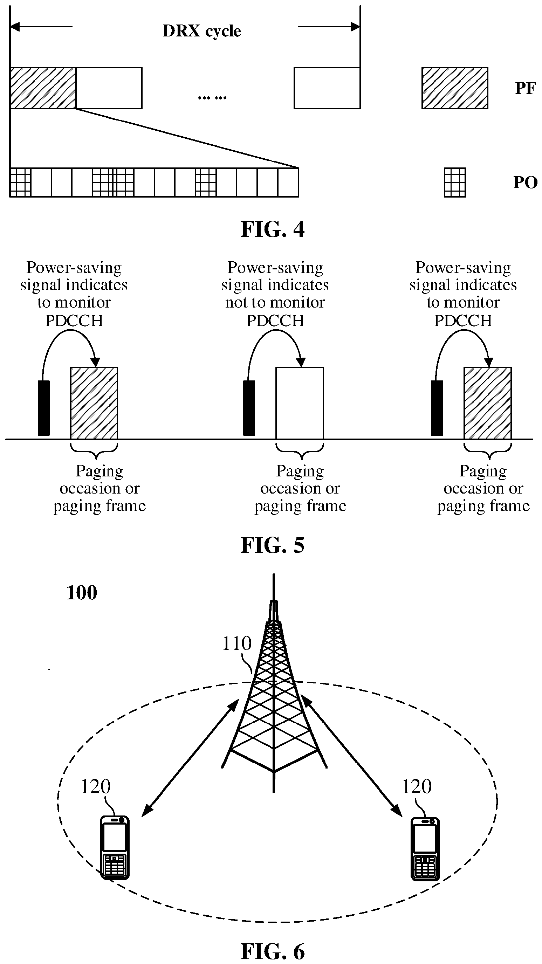

Where T is a DRX cycle for the terminal device to receive a Paging. The network device broadcasts a default DRX cycle (T_sib). If the network device configures a DRX cycle (T_ue) specific for the terminal device through a RRC signaling/high layer signaling, the smaller of the DRX cycle broadcasted by the network device and the DRX cycle specific for the terminal device configured by the RRC signaling/high layer signaling is taken as the DRX cycle for the terminal device, i.e., T = min (T_sib, T_ue). If the network device does not configure the DRX cycle specific for the terminal device the through RRC signaling/high layer signaling, the DRX cycle broadcasted by the network device is taken as the DRX cycle of the UE. N is the number of the PFs contained in one DRX cycle. Ns is the number of POs contained in one PF, and PF-offset is the time domain offset for determining the PF. UE_ID is 5G-S-TMSI mod 1024. A schematic diagram of the position of PF and PO in a DRX cycle is illustrated in FIG. 4.

For a PDCCH search space set, in an NR system, a network device indicates the PDCCH search space set for a terminal device, which indicates the terminal device to detect a PDCCH on corresponding time-frequency resources. The PDCCH search space is typically notified by the network device to the terminal device via a RRC signaling. Configuration information of the Search space set may include the following information:

(1) search space ID;
(2) control ResourceSet Id, indicating ID of the configuration of the control resource set, and configuring time-frequency resources of the PDCCH search space;
(3) a cycle of monitored slot(s) and a offset within the cycle; at present, the cycles supported by the NR include 1, 2, 4, 5, 8, 10, 16, 20, 40, 80, 160, 320, 640, 1280, 2560 slot(s);
(4) Duration, indicating the number of slots continuously monitored during the PDCCH search space cycle;
(5) monitoringSymbolsWithinSlot, indicating which symbols in the slots monitored by a PDCCH are used for monitoring the PDCCH;
(6) PDCCH candidates, indicating configuration information of the PDCCH candidates;
(7) Types of a search space and DCI formats, indicating whether the PDCCH search space is a common search space or a UE-specific search space, and the DCI formats monitored under each type.

A terminal device in an idle state periodically receives a paging message at its own paging occasion, but the probability of the UE being paged may not be high in an actual situation. Although the terminal device in the idle state periodically detects a PDCCH at the paging occasion, the terminal device in the idle state does not detect paging indication information transmitted to itself, which inevitably results in a waste of power. Similar to R16 for a terminal device in a connected state, in R17, the power-saving method in which the terminal device in the idle state receives the paging message is optimized, and a similar power-saving signal is introduced. The power-saving signal, called paging early indication (PEI), indicates the terminal device whether to receive a PDCCH at a target paging occasion before the target paging occasion arrives. The power-saving signal can be a sequence-based signal or a PDCCH channel-based signal. If a PDCCH channel is used to carry the power-saving signal, the existing PDCCH design can be used, so that it is easy to be compatible and multiplexed with the existing system and other channels. The power-saving signal based on the PDCCH channel may further carry additional power-saving information, for example, it may carry terminal device sub-grouping information for indicating the terminal device sub-group corresponding to the power-saving information. A further grouping of multiple terminal devices corresponding to one paging occasion is calculated by the terminal device sub-group via a UE_ID . The sub-grouping information, combined with the power-saving information, can more finely indicate whether the terminal device needs to receive a paging at a target paging occasion. As illustrated in FIG. 5, the power-saving signal indicates whether one or more terminal devices receive pages at corresponding PFs or POs. If the power-saving signal indicates that one terminal device or one terminal device subgroup monitors a PDCCH at a PO or a PF, then the one terminal device or the one terminal device subgroup monitors the PDCCH at the PO or the PF. If the power-saving signal indicates that one terminal device or one terminal device subgroup does not monitor a PDCCH at a PO or a PF, then the one terminal device or the one terminal device subgroup does not monitor the PDCCH at the PO or the PF.

For a terminal device in an idle state, the main power consumption is to periodically receive paging messages. However, a format for transmitting a power-saving signal to the terminal device in the idle state has not been defined.

The technical solution of the embodiments of the present disclosure can be applied to various communication systems, such as: a global system of mobile communication (GSM) system, a code division multiple access (CDMA) system, a wideband code division multiple access (WCDMA) system, a general group radio service (GPRS) system, an LTE system, an LTE frequency division duplex (FDD) system, an LTE time division duplex (TDD) system, an advanced long term evolution (LTE-A) system, an NR system, an evolution system of the NR system, an LTE-based access to unlicensed spectrum (LTE-U) system, an NR-based access to unlicensed spectrum (NR-U) system, a universal mobile telecommunications system (UMTS), a worldwide interoperability for microwave access (WiMAX) communication system, a wireless local area networks (WLAN), a wireless fidelity (WiFi), a next generation communication system or other communication systems, etc.

The system architecture and service scenario described in the embodiments of the present disclosure are intended to illustrate the technical solution of the embodiments of the present disclosure more clearly, and do not constitute a limitation to the technical solution provided by the embodiments of the present disclosure. It is known to those of ordinary skill in the art that the technical solution provided by the embodiments of the present disclosure is equally applicable to similar technical problems as the evolution of the network architecture and the emergence of new service scenarios.

The network device in the embodiments of the present disclosure may be a common base station (such as a NodeB, an eNB or a gNB), a new radio controller (NR controller), a centralized unit, a new radio base station, a radio remote module, a micro base station, a relay, a distributed unit, a transmission reception point (TRP), a transmission point (TP) or any other device. The specific technology and the specific device form adopted by the network device are not limited by the embodiments of the present disclosure. For ease of description, the above-mentioned devices for providing a wireless communication function to the terminal device are collectively referred to as a network device in all the embodiments of the present disclosure.

In the embodiments of the present disclosure, a terminal device may be any terminal, for example, the terminal device may be a user device of machine type communication. That is, the terminal device may also be referred to as user equipment (UE), a mobile station (MS), a mobile terminal (MS), a terminal, etc. The terminal device may communicate with one or more core networks via a radio access network (RAN). For example, the terminal device may be a mobile phone (or "cellular" phone), a computer with a mobile terminal, etc. For example, the terminal device may also be a portable, pocket-sized, hand-held, computer-built or vehicle-mounted mobile device that exchanges language and/or data with the radio access network, which is not specifically limited by the embodiments of the present disclosure.

Alternatively, the network device and the terminal device can be deployed on land, including indoor or outdoor, hand-held or vehicle-mounted. The network device and the terminal device can also be deployed on a water surface. The network device and the terminal device can also be deployed on airplanes, balloons and artificial satellites in the air. The application scenarios of the network device and the terminal device are not limited by the embodiments of the present disclosure.

Alternatively, a communication between the network device and the terminal device or between the terminal devices may be performed through a licensed spectrum, an unlicensed spectrum, or the both. The communication between the network device and the terminal device or between the terminal devices may be performed through a frequency spectrum below 7 gigahertz (GHz), or above 7 GHz, and can also be performed through the frequency spectrum below 7 GHz or above 7 GHz at the same time. The spectrum resources used between the network device and the terminal device are not limited by the embodiments of the present disclosure.

In general, conventional communication systems support a limited number of connections and are easy to implement. However, with the development of the communication technology, mobile communication systems will support not only the conventional communication, but also, for example, a device to device (D2D) communication, a machine to machine (M2M) communication, a machine type communication (MTC), a vehicle to vehicle (V2V) communication, etc. These communication systems may also be applied to the embodiments of the present disclosure.

An exemplary communication system 100 to which the embodiments of the present disclosure are applied is illustrated in FIG. 6. The communication system 100 may include a network device 110 which may be a device that communicates with a terminal device 120 (or referred to as a communication terminal, a terminal). The network device 110 may provide communication coverage for a particular geographic area and may communicate with terminal devices located within the coverage area. Alternatively, the network device 110 may be a base transceiver station (BTS) in a GSM system or a CDMA system, a base station (NodeB, NB) in a WCDMA system, an evolved node B (eNB or eNodeB) in an LTE system, or a wireless controller in a cloud radio access network (CRAN). Alternatively, the network device may be a network-side device in a mobile exchange center, a relay station, an access point, a vehicle-mounted device, a wearable device, a hub, a switch, a bridge, a router, a 5G network, or a network device in a future evolved public land mobile network (PLMN).

The communication system 100 further includes at least one terminal device 120 located within the coverage area of the network device 110. The "terminal device" as used herein includes, but is not limited to, a connection via a wire line, such as via a public switched telephone network (PSTN), a digital subscriber line (DSL), a digital cable, a direct cable connection; and/or another one data connection/network; and/or via a wireless interface, such as a cellular network, a wireless local area network (WLAN), a digital television network such as a DVB-H network, a satellite network, an AM-FM broadcast transmitter; and/or a device of another terminal device arranged to receive/transmit a communication signal; and/or an internet of things (IoT) device. A terminal device arranged to communicate through a wireless interface may be referred to as a "wireless communication terminal," a "wireless terminal," or a "mobile terminal". Examples of the mobile terminal include, but are not limited to, a satellite or a cellular phone; a personal communications system (PCS) terminal that may combine a cellular radio telephone with capabilities of data processing, data facsimileing, and data communication; a PDA which may include a radio telephone, a pager, an Internet/Intranet access, a web browser, a notebook, a calendar, and/or a global positioning system (GPS) receiver; and a conventional laptop and/or a handheld receiver or other electronic devices including a radio telephone transceiver. The terminal device may refer to an access terminal, a user equipment (UE), a user unit, a user station, a mobile station, a remote station, a remote terminal, a mobile device, a user terminal, a terminal, a wireless communication device, a user agent, or a user device. The access terminal may be a cellular telephone, a cordless telephone, a session initiation protocol (SIP) telephone, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolved PLMN, etc.

Alternatively, a device to device (D2D) communication may be performed between the terminal devices 120.

Alternatively, a 5G system or a 5G network may also be referred to as a new radio (NR) system or an NR network.

FIG. 6 exemplarily illustrates one network device and two terminal devices. Alternatively, the communication system 100 may include multiple network devices and other numbers of terminal devices may be included within the coverage area of each network device, which is not limited by the embodiments of the present disclosure.

Alternatively, the communication system 100 may also include other network entities, such as a network controller, a mobility management entity, etc., which are not limited by the embodiments of the present disclosure.

It should be understood that a device having a communication function in a network/system in the embodiments of the present disclosure may be referred to as a communication device. Taking the communication system 100 illustrated in FIG. 6 as an example, the communication device may include a network device 110 and a terminal device 120 having a communication function, and the network device 110 and the terminal device 120 may be specific devices described above and will not be described here. The communication device may also include other devices in the communication system 100, such as a network controller, a mobility management entity and other network entities, which are not limited by the embodiments of the present disclosure.

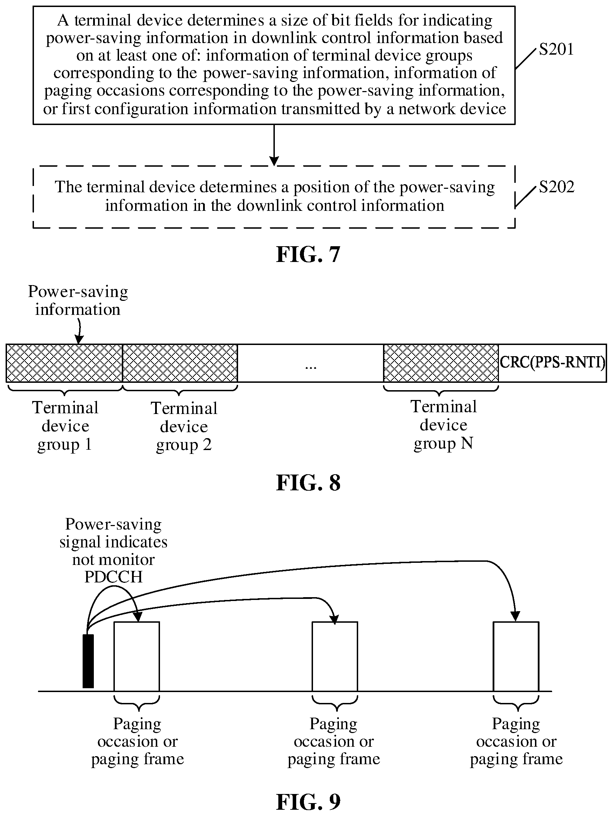

As illustrated in FIG. 7, an embodiment of the present disclosure provides an alternative process flow of the method for determining power-saving information , which including the following operations.

At S201, a terminal device determines a size of bit fields for indicating power-saving information in downlink control information based on at least one of: information of terminal device groups corresponding to the power-saving information, information of paging occasions corresponding to the power-saving information, or first configuration information transmitted by a network device.

In some embodiments, the terminal device may be a terminal device in an RRC_IDLE state. The power-saving information indicates whether the terminal device receives a paging message at a target PO. The power-saving information may be a paging message corresponding to multiple terminal device groups. The power-saving information may also be a paging message corresponding to multiple paging occasions. The power-saving information may also be a paging message corresponding to multiple paging occasion groups. The paging message may be received through a PDCCH carrying paging indication information and/or a PDSCH carrying the paging message.

In some embodiments, the information of the terminal device groups corresponding to the power-saving information includes at least one of: the number of the terminal device groups corresponding to the power-saving information, or a bit field size of the power-saving information corresponding to each of the terminal device groups.

If the number of the terminal device groups corresponding to the power-saving information is N, the power-saving information may indicate whether terminal devices in the N terminal device groups receive paging messages or detect PDCCHs at target POs. For example, the power-saving information may include N bit fields, each of which indicates whether terminal devices in one terminal device group receive a paging message or detects a PDCCH at a target PO. The power-saving information corresponding to each of the terminal device groups has a same bit field size or a different bit field size.

In some embodiments, the information of the paging occasions corresponding to the power-saving information may be the number of the paging occasions corresponding to the power-saving information. The size of the bit fields for indicating the power-saving information is related to the number of the paging occasions or the number of paging occasion groups corresponding to the power-saving information.

In a specific implementation, if terminal devices are not grouped or only one terminal device group exists, one bit field of the power-saving information may correspond to one paging occasion or one paging occasion group, or one bit field of the power-saving information may correspond to at least two paging occasions or at least two paging occasion groups, or at least two bit fields of the power-saving information may correspond to one paging occasion or one paging occasion group. For example, the power-saving information includes X bit fields, each of which corresponds to one paging occasion or one paging occasion group, i.e., one bit field indicates whether the terminal devices receive paging messages at one paging occasion or one paging occasion group. Alternatively, the power-saving information includes X bit fields, each of which corresponds to at least two paging occasions or at least two paging occasion groups, i.e., one bit field indicates whether the terminal devices receive paging messages on at least two paging occasions or at least two paging occasion groups. Alternatively, the power-saving information includes X bit fields, and at least two bit fields of the power-saving information may correspond to one paging occasion or one paging occasion group, i.e., the at least two bit fields indicate whether the terminal devices receive paging messages at one paging occasion or one paging occasion group.

In a specific implementation , if terminal devices are divided into at least two terminal device groups, one bit field of the power-saving information corresponding to each terminal device group corresponds to one paging occasion or one paging occasion group; or one bit field of the power-saving information corresponding to each terminal device group corresponds to at least two paging occasions or at least two paging occasion groups; or at least two bit fields of the power-saving information corresponding to each terminal device group correspond to one paging occasion or one paging occasion group. For example, the power-saving information includes Y bit fields, one bit field of the power-saving information corresponding to each terminal device group corresponds to one paging occasion or one paging occasion group, i.e., one bit field indicates whether one terminal device group receives paging messages at one paging occasion or one paging occasion group, and the Y bit fields indicate whether one terminal device group receives paging messages at Y paging occasions or Y paging occasion groups. Alternatively, the power-saving information corresponding to each terminal device group includes Y bit fields, one bit field of the power-saving information corresponding to each terminal device group corresponds to at least two paging occasions or at least two paging occasion groups, i.e., one bit field indicates whether one terminal device group receives paging messages on at least two paging occasions or at least two paging occasion groups, and Y bit fields indicate whether one terminal device group receives paging messages on at least 2Y paging occasions or at least 2Y paging occasion groups. Alternatively, the power-saving information corresponding to each terminal device group includes Y bit fields, and at least two bit fields of the power-saving information corresponding to each terminal device group corresponds to one paging occasion or one paging occasion group, i.e., at least two bit fields indicate whether one terminal device group receives paging messages at one paging occasion or one paging occasion group, and Y bit fields indicate whether one terminal device group receives paging messages at up to Y/2 paging occasions or at up to Y/2 paging occasion groups.

Herein, all terminal devices in one terminal device group follow the same paging message receiving policy, that is, all terminal devices in one terminal device group receive paging messages or do not receive paging messages at one monitoring occasion or one monitoring occasion group.

For an alternative implementation of the power-saving information corresponding to multiple paging occasions or multiple paging occasion groups, the power-saving information corresponding to the terminal device groups includes paging power-saving indication information and time information corresponding to the paging power-saving indication information.

The paging power-saving indication information indicates whether at least one terminal device in the terminal device group receives paging messages, and the time information corresponding to the paging power-saving indication information indicates one or more effective time periods corresponding to the content indicated by the paging power-saving indication information. It should be understood that the effective time period herein may be continuous, for example, a continuous period of time, or may also be discrete, for example, discrete POs or PFs, which is not limited herein.

Terminal devices in each terminal device group may determine whether to receive paging messages in the effective time period based on the corresponding paging power-saving indication information and the effective time period corresponding to the content indicated by the paging power-saving indication information.

By configuring the effective time period of the content indicated by the paging power-saving indication information, the time period for the terminal device to receive a paging message can be indicated more flexibly, thereby saving signaling overhead and further improving the power-saving effect.

Alternatively, the time period indicated by the time information corresponding to the paging power-saving indication information includes one or more paging frames (PF) and/or one or more paging occasions (PO). For example, the time information corresponding to the paging power-saving indication information may indicate the number of the PFs or the POs.

Alternatively, when the time period indicated by the time information corresponding to the paging power-saving indication information includes a first time period, the terminal device considers that the PFs and/or the POs in the first time period correspond to the paging power-saving indication information, that is, the PFs and/or POs in the first time period are the effective time periods corresponding to the paging power-saving indication information. Further, the terminal devices in the terminal device group receive or do not receive paging messages at one or more PFs or POs in the first time period based on the paging power-saving indication information.

Alternatively, in some embodiments, the time period indicated by the time information corresponding to the paging power-saving indication information is a time period applicable to the paging power-saving indication information corresponding to the terminal device group, or a common time period applicable to the paging power-saving indication information corresponding to multiple terminal device groups.

That is, the effective time period of the paging power-saving indication information corresponding to each terminal device group may be specific to each terminal device group (i.e., per UE group), or the effective time period of the paging power-saving indication information corresponding to each terminal device group may be common, such as a common effective time period configured based on a cell.

In some embodiments, the meaning of the time period indicated by the time information corresponding to the paging power-saving indication information is predefined or configured by the network device. For example, the time period indicated by the time information corresponding to the paging power-saving indication information included in the first information is predefined as a common effective time period, or the network device configures the time period indicated by the time information corresponding to the paging power-saving indication information included in the first information as a common effective time period. As an example, the network device may configure the meaning of the time period indicated by the time information corresponding to the paging power-saving indication information through paging configuration information.

In the embodiments of the present disclosure, the "predefined" may be implemented by way of pre-storing corresponding codes, tables or other means that may be used to indicate relevant information in a device (e.g., including a terminal device and a network device), and the specific implementation is not limited by the present disclosure. For example, the "predefined" may refer to what is defined in the protocol.

In the embodiments of the present disclosure, the "protocol" may refer to a standard protocol in the communication field, such as, but not limited to, an LTE protocol, an NR protocol, and a related protocol applied in future communication systems.

It should be understood that the specific indication manner of the time information corresponding to the paging power-saving indication information is not limited by the embodiments of the present disclosure.

As an example, the time information corresponding to the paging power-saving indication information includes a first bit map including multiple bits, each bit corresponds to a specific time period, and a different value of each bit is used to indicate whether or not a paging message is received at a corresponding time period.

Alternatively, the time period corresponding to each bit may be continuous, such as a continuous period of time. In such a case, each bit may also be considered to correspond to the PFs or the POs in the period of time. Alternatively, the time period corresponding to each bit may also be discrete, such as multiple discrete POs and the like.

Alternatively, in some embodiments, the time period corresponding to each bit includes at least one PF and/or at least one PO.

It should be understood that, in some embodiments, the time information corresponding to the paging power-saving indication information may also indicate an invalid time period corresponding to the content indicated by the paging power-saving indication information, and the terminal devices in the terminal device group may use the remaining PFs and POs in the PFs and POs corresponding to the terminal device group, excluding the PFs and POs in the invalid time period, as the valid time period corresponding to the paging power-saving indication information.

For an alternative implementation of the power-saving information corresponding to multiple paging occasions or multiple paging occasion groups, the power-saving information corresponding to each terminal device group includes multiple pieces of paging power-saving indication information and time information corresponding to each of the multiple pieces of paging power-saving indication information.

The paging power-saving indication information indicates whether at least one terminal device in the terminal device group receives a paging message, and the time information corresponding to the paging power-saving indication information indicates the effective time period corresponding to the content indicated by the paging power-saving indication information.

Terminal devices in each terminal device group may determine whether to receive paging messages in the effective time periods based on the effective time periods corresponding to the content indicated by the multiple pieces of paging power-saving indication information and the effective time periods corresponding to the multiple pieces of paging power-saving indication information.

By configuring multiple pieces of paging power-saving indication information and the effective time periods corresponding to the content indicated by the multiple pieces of paging power-saving indication information for each terminal device group, the time period for the terminal device to receive a paging message can be indicated more flexibly, thereby saving signaling overhead and further improving the power-saving effect.

For an alternative implementation of the power-saving information corresponding to multiple paging occasions or multiple paging occasion groups, The power-saving information corresponding to the terminal device group includes multiple paging power-saving indication information, each paging power-saving indication information indicates whether at least one terminal device in the terminal device group receives a paging message, and each paging power-saving indication information corresponds to a specific time period.

Terminal devices in each terminal device group can determine whether to receive paging messages in the effective time period according to the multiple pieces of paging power-saving indication information, and the effective time period corresponding to each of the multiple pieces of paging power-saving indication information respectively.

By configuring multiple pieces of paging power-saving indication information for each terminal device group, the time period for the terminal device to receive a paging message can be indicated more flexibly, thereby saving signaling overhead and further improving the power-saving effect.

In some embodiments, the information of the paging occasions corresponding to the power-saving information may be determined by the network device. The paging occasions corresponding to the power-saving information are determined by second configuration information transmitted by the network device, or the paging occasions corresponding to the power-saving information are indicated by a DCI indicating the power-saving information.

Hereinafter, different implementation methods for determining a size of bit fields for indicating power-saving information in downlink control information by the terminal device will be described respectively.

In a first manner, the terminal device determines the size of the bit fields for indicating the power-saving information in the DCI based on the information of the terminal device groups corresponding to the power-saving information.

In some embodiments, the information of the terminal device groups corresponding to the power-saving information may include: the number of the terminal device groups corresponding to the power-saving information, and a bit field size of the power-saving information corresponding to each of the terminal device groups. In such a scenario, the size of the bit fields for indicating the power-saving information in the DCI is a sum of bit field sizes of the power-saving information corresponding to all of the terminal device groups. For example, if M terminal device groups exist, the size of the bit fields for indicating the power-saving information in the DCI is the sum of the bit field sizes of the power-saving information corresponding to the M terminal device groups.

In some embodiments, grouping of the terminal devices may be configured by the network device, the network device transmits the information of the terminal device groups to the terminal device, and the number of the terminal device groups may be 2, 4, 8, 16, etc. A schematic diagram of the power-saving information corresponding to N terminal device groups is illustrated in FIG. 8, the power-saving information indicates whether the N terminal device groups detect paging messages at a target paging occasion, and the power-saving information corresponding to each of the N terminal device groups may have a same bit field size or a different bit field size. For example, if the bit field size of the power-saving information corresponding to each of a first terminal device group and a second terminal device group is 2 bits, and the bit field size of the power-saving information corresponding to each of a third terminal device group to a Nth terminal device group is 3 bits, then the size of the bit fields for indicating the power-saving information is $[4 + (N-2) * 3]$ bits.

In a second manner, the terminal device determines the size of the bit fields for indicating the power-saving information in the DCI based on the information of the paging occasions corresponding to the power-saving information.

In some embodiments, the information of the paging occasions corresponding to the power-saving information may be the number of the paging occasions corresponding to the power-saving information. The power-saving information may indicate whether the terminal device detects a paging message at one paging occasion, or at one paging occasion group, or at multiple paging occasions, or at multiple paging occasion groups. In this scenario, the terminal devices may not be grouped or all the terminal devices may be grouped into one terminal device group, i.e., the power-saving information indicates whether all of the terminal devices detect paging messages at one paging occasion, or one paging occasion group, or multiple paging occasions, or multiple paging occasion groups. Alternatively, the power-saving information only indicates whether one terminal device detects a paging message at one paging occasion, or one paging occasion group, or multiple paging occasions, or multiple paging occasion groups. A schematic diagram of the power-saving information indicating that one terminal device does not detect a paging message at multiple paging occasions or paging frames is illustrated in FIG. 9, the power-saving information indicates that the terminal device does not detect a paging message at three paging occasions or paging frames following the power-saving information.

In some embodiments, the size of the bit fields for indicating the power-saving information is related to the number of the paging occasions or the number of paging occasion groups corresponding to the power-saving information. In a specific implementation, one bit field of the power-saving information may correspond to one paging occasion or one paging occasion group, or one bit field of the power-saving information may correspond to at least two paging occasions or at least two paging occasion groups, or at least two bit fields of the power-saving information may correspond to one paging occasion or one paging occasion group. For example, the power-saving information includes P bit fields, each of which indicates whether the terminal device detects a paging message at one paging occasion or at one paging occasion group. Alternatively, the power-saving information includes P bit fields, each of which indicates whether the terminal device detects a paging message at two or more paging occasions or paging occasion groups. Alternatively, the power-saving information includes P bit fields, two or more of which indicate whether the terminal device detects a paging message at one paging occasion or at one paging occasion group.

In an alternative implementation, the DCI carries the power-saving information corresponding to multiple paging occasions, and can indicate whether the terminal device detects a paging message at multiple paging occasions or multiple paging occasion groups through a bitmap manner. If a value of a bit in the bitmap is "1", it means that the terminal device detects the paging message in a paging occasion or a paging occasion group corresponding to the bit. If a value of a bit in the bitmap is "0", it means that the terminal device does not detect a paging message in a paging occasion or a paging occasion group corresponding to the bit. If the number of paging occasions or the number of paging occasion groups is X, and the power-saving information corresponding to each paging occasion or paging occasion group is 1 bit, the size of the bit fields for indicating the power-saving information is X bits.

In another alternative implementation, the DCI carries the power-saving information corresponding to multiple paging occasions, and it may also indicate by 2 bits whether 1, 2, 3 and 4 paging occasions or paging occasion groups detect paging messages at continuous 4 paging occasions following the DCI carrying the power-saving information. Here, if the number of paging occasions or paging occasion groups is 4, the size of the bit fields for indicating the power-saving information is 2 bits.

In a third manner, the terminal device determines the size of the bit fields for indicating the power-saving information in the DCI based on the information of the terminal device groups corresponding to the power-saving information and the information of the paging occasions corresponding to the power-saving information.

In some embodiments, the information of the terminal device groups may be the number of the terminal device groups. In the case where multiple terminal device groups exist, the terminal device can first determine a bit field size corresponding to each terminal device group based on the information of the paging occasions corresponding to the power-saving information, and then determine the size of the bit fields for indicating the power-saving information in the DCI based on the number of the terminal device groups. A processing method that the terminal device determines the bit field size corresponding to each terminal device group based on the information of the paging occasions corresponding to the power-saving information can be the same as that of the second manner. A processing method that the terminal device determines the size of the bit fields for indicating the power-saving information in the DCI based on the number of the terminal device groups may be the same as that of the first manner.

In some embodiments, the size of the bit fields for indicating the power-saving information is related to the number of the paging occasions or the number of paging occasion groups corresponding to the power-saving information. In a specific implementation, one bit field of the power-saving information corresponding to each terminal device group may correspond to one paging occasion or one paging occasion group, or one bit field of the power-saving information corresponding to each terminal device group may correspond to at least two paging occasions or at least two paging occasion groups, or at least two bit fields of the power-saving information corresponding to each terminal device group may correspond to one paging occasion or one paging occasion group. For example, the power-saving information includes P bit fields, each of which indicates whether the terminal devices in one terminal device group detect paging messages at one paging occasion or at one paging occasion group. Alternatively, the power-saving information includes P bit fields, each of which indicates whether the terminal devices in one terminal device group detect paging messages at two or more paging occasions or paging occasion groups. Alternatively, the power-saving information includes P bit fields, two or more of which indicate whether the terminal devices in one terminal device group detect a paging message at one paging occasion or at one paging occasion group.

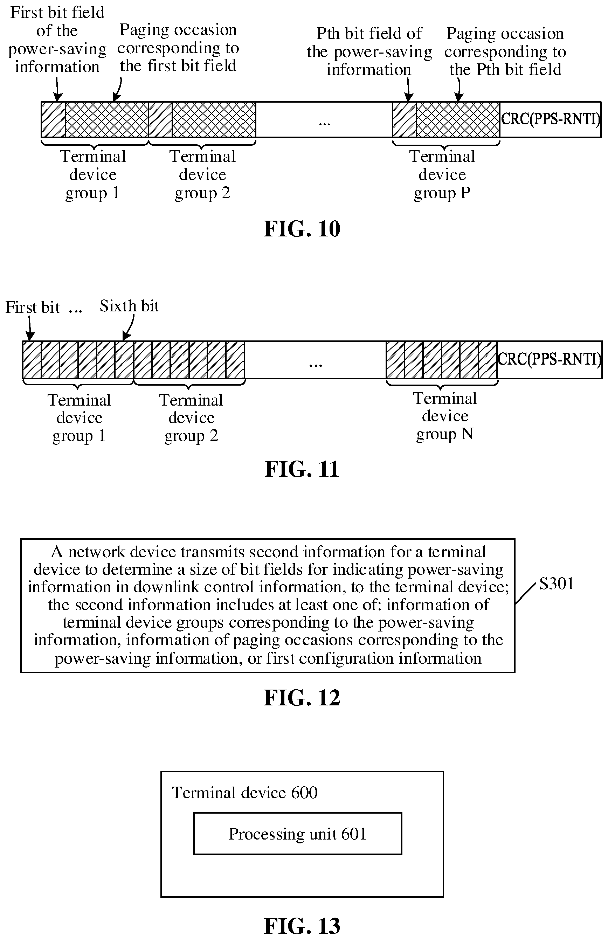

As illustrated in FIG. 10, the power-saving information includes P bit fields, one bit field may indicate whether terminal devices in one terminal device group detect paging messages at one paging occasion group, that is, a first bit field in the P bit fields indicates whether terminal devices in a first terminal device group detect paging messages at one paging occasion group, a second bit field in the P bit fields indicates whether terminal devices in a second terminal device group detect paging messages at one paging occasion group, and so on, and the Pth bit field in the P bit fields indicates whether terminal devices in a Pth terminal device group detect paging messages at one paging occasion group.

In an alternative implementation, the DCI carries the power-saving information of multiple terminal device groups, the power-saving information of each terminal device group includes power-saving information of multiple paging occasions or paging frames, and the bit field size of the power-saving information of the multiple paging occasions or paging occasion groups is related to the number of the paging occasions or the paging frames corresponding to the power-saving information.

A schematic diagram of indicating whether multiple terminal device groups detect paging messages at multiple paging occasions through the power-saving information is illustrated in FIG. 11. if it is indicated by a bitmap that whether one terminal device group detects a paging message at multiple paging occasions or at multiple paging occasion groups, and taking the number of bits included in the bitmap is 6 as an example, then it may be indicated that whether one terminal device group detects a paging message at six paging occasions or at six paging occasion groups. For a terminal device group 1, each of the 6 bits included in the bitmap indicates whether terminal devices in the terminal device group 1 detect paging messages at paging occasion 1 to paging occasion 6, respectively. The power-saving information indication manner of a terminal device group 2 to a terminal device group N is the same as the terminal device group 1.

In a fourth manner, the terminal device determines the size of the bit fields for indicating the power-saving information in the DCI based on the first configuration information transmitted by the network device.

In the embodiments of the present disclosure, the DCI carrying the power-saving information can be an existing DCI or a new DCI. The existing DCI can be the existing DCI carrying the first information and further carrying the power-saving information. The first information may be existing control information, such as at least one of: paging indication information, scheduling information of system information, system information changing indication, or a paging short message, etc. That is, the power-saving information is carried by the existing DCI carrying the first information. The new DCI may be a DCI that only carries the power-saving information, i.e., the control information in the DCI only indicates the power-saving information. In addition to carrying the power-saving information, the new DCI can further carry the first information, i.e., the new DCI carries the power-saving information and the first information such as the paging indication information, the scheduling information of the system information, the system information changing indication, or the paging short message. The new DCI and the existing DCI carrying the first information may have a same format or a different format when the new DCI carries the power-saving information and the first information.

In some embodiments, if the downlink control information further carries the first information, the power-saving information may be carried by part or all of reserved bit fields in the DCI. Alternatively, unused bit fields in the DCI are used to indicate the power-saving information.

In some alternative implementations, the first information is the paging indication information, and the power-saving information is carried by a DCI carrying the paging indication information, then the DCI has a format of is DCI format 1_0, and a cyclic redundancy check (CRC) in the DCI can be scrambled by a paging-radio network temporary identity (P-RNTI). The DCI format 1_0 of the CRC scrambled by the P-RNTI carries indication information related to power-saving, which indicates whether the terminal devices in one or more terminal device groups needs to receive paging messages at corresponding paging occasions or paging occasion groups. The power-saving information can be indicated by unused bit fields in the DCI (i.e., the power-saving information can be indicated by a first bit field in a short message field) when the power-saving information is carried by the DCI carrying paging indication information. For example, 4-8 bits in the short message field in Table 1 can be used to indicate the power-saving information.

Table 1: short message

| Bit | Short Message |
|-----|---------------|
| 1 | *systemInfoModification*<br>If set to 1: indication of a BCCH modification other than SIB6, SIB7 and SIB8. |
| 2 | *etwsAndCmasIndication*<br>If set to 1: indication of an ETWS primary notification and/or an ETWS secondary notification and/or a CMAS notification. |
| 3 | *stopPagingMonitoring*<br>If set to 1: stop monitoring PDCCH occasions(s) for paging in this PO. |
| 4-8 | Not used in this release of the specification, and shall be ignored by UE if received. |

The reserved bit fields in the DCI can also be used to indicate the power-saving information (i.e., a second bit field in the short message indicator field is used to indicate the power-saving information), for example, a reserved bit field "00" in Table 2 can be used to indicate the power-saving information.

Table 2: short message indicator

| Bit field | Short Message indicator |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

When a value of the short message indicator field is 00, 8 bits in the short message field can be newly defined to carry multiple power-saving signals. One implementation is illustrated in Table 3:

Table 3: Short message

| Bit | Short Message |
|---|---|
| 1 | Power-saving signal 1, corresponding to terminal device group 1 |
| 2 | Power-saving signal 2, corresponding to terminal device group 2 |
| 3 | Power-saving signal 3, corresponding to terminal device group 3 |
| 4 | Power-saving signal 4, corresponding to terminal device group 4 |
| 5 | Power-saving signal 5, corresponding to terminal device group 5 |
| 6 | Power-saving signal 6, corresponding to terminal device group 6 |
| 7 | Power-saving signal 7, corresponding to terminal device group 7 |
| 8 | Power-saving signal 8, corresponding to terminal device group 8 |

In some embodiments, the DCI format 1_0 of the CRC scrambled by the P-RNTI includes reserved bit fields of 6 bits, part or all of which may also be used to carry the power-saving information.

In some alternative implementations, the first information is the scheduling information of the system information, i.e., the power-saving information is carried by the DCI carrying the scheduling information of the system information, then the format of the DCI is DCI format 1_0, and the CRC in the DCI can be scrambled by a system information-radio network temporary identity (SI-RNTI). The DCI format 1_0 of the CRC scrambled by the SI-RNTI may include reserved bit fields of 15 bits, and part or all of the reserved bit fields may also be used to carry the power-saving information.

The embodiments of the present disclosure utilizes the existing DCI to carry the power-saving information, so that the network device does not need to transmit additional information to the terminal device when a network device transmits the power-saving information to a terminal device, thereby saving network resources.

In some embodiments, if the DCI carrying the power-saving information is a new DCI, the new DCI may carry only the power-saving information, i.e., the control information in the DCI is used only to indicate the power-saving information. In addition to carrying the power-saving information, the new DCI can further carry the existing control information, such as paging indication information, the scheduling information of the system information, the system information changing indication, the paging short message, etc. The new DCI may have a format of DCI format 1-0 or DCI format 2-6. The CRC in the new DCI may be scrambled in a way different from the CRC in the existing DCI. For example, the CRC in the new DCI may be scrambled by a paging power saving radio network temporary identity (PPS-RNTI). The format of the new DCI is not limit by the present disclosure, and the new DCI may have a new DCI format.

In some embodiments, the method for determining power-saving information may further include the following operation.

At S202, the terminal device determines a position of the power-saving information in the downlink control information.

In some embodiments, the terminal device is able to determine the size of the bit fields for indicating the power-saving information in the DCI according to any one of the first manner to the fourth manner in S201. The terminal device can determine a terminal device group to which it belongs based on its own identification (UE-ID) and predefined rules. The terminal device enables to determine the position of the power-saving information corresponding to the terminal device in the DCI based on the number of the terminal device groups and/or the number of the paging occasions or the paging occasion groups corresponding to the power-saving information in each terminal device group that are preset or indicated by the network device.

For example, the terminal device determines that six terminal device groups are included based on an indication of the network device, a bit field size of the power-saving information corresponding to each terminal device group is 1 bit, and a terminal device determines that the terminal device belongs to a second terminal device group based on the UE-ID and the predefined rules. If the terminal device determines that the size of the bit fields for indicating the power-saving information in the DCI is 6 bits, then a second bit is used to indicate whether the terminal device group to which the terminal device belongs detects a paging message at a target paging occasion.

It should be noted that, in the embodiments of the present disclosure, the DCI may be carried by a PDCCH, and an operation of detecting a paging message can also be referred to as an operation of detecting the PDCCH carrying the paging indication information and/or a PDSCH carrying the paging message. A paging occasion group includes at least two paging occasions, and all the paging occasions in the paging occasion group can belong to one paging frame or at least two adjacent paging frames. The terminal device group may also be referred to as a terminal device sub-group or paging sub-group.

Another alternative process flow of the method for determining power-saving information provided by an embodiment of the present disclosure is illustrated in FIG. 12, and includes the following operations.

At S301, a network device transmits second information for a terminal device to determine a size of bit fields for indicating power-saving information in downlink control information, to the terminal device. The second information includes at least one of: information of terminal device groups corresponding to the power-saving information, information of paging occasions corresponding to the power-saving information, or first configuration information.

In some embodiments, the terminal device may be a terminal device in an RRC_IDLE state. The power-saving information indicates whether the terminal device receives a paging message at a target PO before the target PO arrives, and the paging message may be received through a PDCCH carrying paging indication information and/or a PDSCH carrying the paging message.

In some embodiments, the description with respect to the information of the terminal device groups corresponding to the power-saving information, the information of the paging occasions corresponding to the power-saving information, and the first configuration information is the same as that in S201, and will not be repeated here.

The method for determining power-saving information provided by the embodiments of the present disclosure enables the terminal device to determine the size of the bit fields for indicating the power-saving information in the DCI based on at least one of the information of the terminal device groups corresponding to the power-saving information, the information of the paging occasions corresponding to the power-saving information, or the first configuration information transmitted by the network device, and after determining the bit field size used for indicating the power-saving information in the DCI, the position of the power-saving information corresponding to the terminal device in the DCI can be further determined, so that the terminal device can accurately receive the power-saving information corresponding to itself. The terminal device can determine whether to receive a paging message at a target paging occasion through the received power-saving information, thereby realizing the power-saving of the terminal device.

In order to realize the method for determining power-saving information provided by the embodiments of the present disclosure, an embodiment of the present disclosure further provides a terminal device. An alternative composition structure of the terminal device 600 is illustrated in FIG. 13, and the terminal device includes a processing unit 601.

The processing unit 601 is configured to determine a size of bit fields for indicating power-saving information in downlink control information based on at least one of: information of terminal device groups corresponding to the power-saving information, information of paging occasions corresponding to the power-saving information, or first configuration information transmitted by a network device.

In some embodiments, the information of the terminal device groups corresponding to the power-saving information includes at least one of: the number of the terminal device groups corresponding to the power-saving information; or a bit field size of the power-saving information corresponding to each of the terminal device groups.

In some embodiments, the size of the bit fields for indicating the power-saving information is a sum of bit field sizes of the power-saving information corresponding to all of the terminal device groups.

In some embodiments, the power-saving information corresponding to each of the terminal device groups has a same bit field size; or the power-saving information corresponding to each of the terminal device groups has a different bit field size.

In some embodiments, the information of the paging occasions includes: the number of the paging occasions, or the number of paging occasion groups.

In some embodiments, the size of the bit fields for indicating the power-saving information is related to the number of the paging occasions or the number of paging occasion groups corresponding to the power-saving information.

In some embodiments, one bit field of the power-saving information corresponding to each terminal device group corresponds to one paging occasion or one paging occasion group.

Alternatively, one bit field of the power-saving information corresponding to each terminal device group corresponds to at least two paging occasions or at least two paging occasion groups.

Alternatively, at least two bit fields of the power-saving information corresponding to each terminal device group correspond to one paging occasion or one paging occasion group.

In some embodiments, one bit field of the power-saving information corresponds to one paging occasion or one paging occasion group.

Alternatively, one bit field of the power-saving information corresponds to at least two paging occasions or at least two paging occasion groups.

Alternatively, at least two bit fields of the power-saving information correspond to one paging occasion or one paging occasion group.

In some embodiments, the paging occasions corresponding to the power-saving information are determined by second configuration information transmitted by the network device.

Alternatively, the paging occasions corresponding to the power-saving information are indicated by downlink control information.

In some embodiments, the information of the paging occasions corresponding to the power-saving information is determined by the network device.

In some embodiments, the downlink control information includes control information for indicating only the power-saving information.

In some embodiments, the downlink control information includes control information for indicating first information, and the first information is different from the power-saving information.

In some embodiments, the first information includes one of: paging indication information, scheduling information of system information, system information changing indication, or a paging short message.

In some embodiments, the downlink control information includes reserved bit fields, part or all of the reserved bit fields are used to indicate the power-saving information; or unused bit fields in the downlink control information are used to indicate the power-saving information.

In some embodiments, the first information includes a short message information field, and a first bit field in the short message information field of the first information is used to indicate the power-saving information.

Alternatively, a second bit field in the short message information field of the first information is used to indicate the power-saving information.

In some embodiments, the power-saving information indicates whether the terminal device receives a paging message at a target paging occasion before the target paging occasion arrives.

In some embodiments, the downlink control information has a downlink control information format of DCI format 1-0, or DCI format 2-6.

In some embodiments, the processing unit 601 is further configured to determine a position of the power-saving information in the downlink control information.

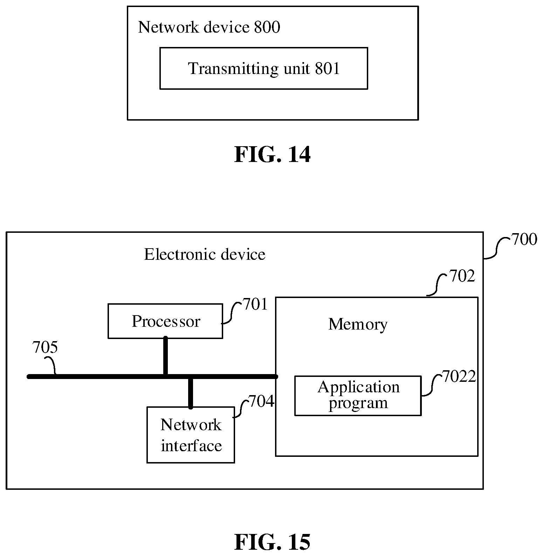

In order to realize the method for determining power-saving information provided by the embodiments of the present disclosure, an embodiment of the present disclosure further provides a network device. An alternative composition structure of the network device 800 is illustrated in FIG. 14, and the network device includes a transmitting unit 801.

The transmitting unit 801 is configured to transmit second information for a terminal device to determine a size of bit fields for indicating power-saving information in downlink control information, to the terminal device. The second information includes at least one of: information of terminal device groups corresponding to the power-saving information, information of paging occasions corresponding to the power-saving information, or first configuration information.

In some embodiments, the information of the terminal device groups corresponding to the power-saving information includes at least one of: the number of the terminal device groups corresponding to the power-saving information; or a bit field size of the power-saving information corresponding to each of the terminal device groups.

In some embodiments, the size of the bit fields for indicating the power-saving information is a sum of bit field sizes of the power-saving information corresponding to all of the terminal device groups.

In some embodiments, the power-saving information corresponding to each of the terminal device groups has a same bit field size.

Alternatively, the power-saving information corresponding to each of the terminal device groups has a different bit field size.

In some embodiments, the information of the paging occasions includes: the number of the paging occasions, or the number of paging occasion groups.

In some embodiments, the size of the bit fields for indicating the power-saving information is related to the number of the paging occasions or the number of paging occasion groups corresponding to the power-saving information.

In some embodiments, one bit field of the power-saving information corresponding to each terminal device group corresponds to one paging occasion or one paging occasion group.

Alternatively, one bit field of the power-saving information corresponding to each terminal device group corresponds to at least two paging occasions or at least two paging occasion groups.

Alternatively, at least two bit fields of the power-saving information corresponding to each terminal device group correspond to one paging occasion or one paging occasion group.

In some embodiments, one bit field of the power-saving information corresponds to one paging occasion or one paging occasion group.

Alternatively, one bit field of the power-saving information corresponds to at least two paging occasions or at least two paging occasion groups.

Alternatively, at least two bit fields of the power-saving information correspond to one paging occasion or one paging occasion group.

In some embodiments, the paging occasions corresponding to the power-saving information are determined by second configuration information transmitted by the network device.

Alternatively, the paging occasions corresponding to the power-saving information are indicated by the downlink control information.

In some embodiments, the information of the paging occasions corresponding to the power-saving information is determined by the network device.

In some embodiments, the downlink control information includes control information for indicating only the power-saving information.

In some embodiments, the downlink control information includes control information for indicating first information, and the first information is different from the power-saving information.

In some embodiments, the first information includes one of: paging indication information, scheduling information of system information, system information changing indication, or a paging short message.

In some embodiments, the downlink control information includes reserved bit fields, part or all of the reserved bit fields are used to indicate the power-saving information.

Alternatively, unused bit fields in the downlink control information are used to indicate the power-saving information.

In some embodiments, the first information includes a short message information field, and a first bit field in the short message information field of the first information is used to indicate the power-saving information.

Alternatively, a second bit field in the short message information field of the first information is used to indicate the power-saving information.

In some embodiments, the power-saving information indicates whether the terminal device receives a paging message at a target paging occasion before the target paging occasion arrives.

In some embodiments, the downlink control information has a downlink control information format of DCI format 1-0, or DCI format 2-6.

It should be noted that in the embodiments of the present disclosure, the function of the processing unit 601 can be implemented by a processor and the function of the transmitting unit 801 can be implemented by a transmitter or a transceiver.

An embodiment of the present disclosure further provides a terminal device, including a processor and a memory for storing a computer program capable of running on the processor, the processor is configured to perform the operations of the method for determining power-saving information performed by the terminal device when running the computer programs.

An embodiment of the present disclosure further provides a network device including a processor and a memory for storing computer programs capable of running on the processor, and the processor is configured to perform the operations of the method for determining power-saving information performed by the network device when running the computer programs.

An embodiment of the present disclosure further provides a chip including a processor, and the processor is configured to call and run a computer program from a memory, to cause a device on which the chip is installed to perform the method for determining power-saving information performed by the terminal device.

An embodiment of the present disclosure further provides a chip including a processor, and the processor is configured to call and run a computer program from a memory, to cause a device on which the chip is installed to perform the method for determining power-saving information performed by the network device.

An embodiment of the present disclosure further provides a storage medium having stored an executable program that, when executed by a processor, causes the processor to perform the method for determining power-saving information performed by the terminal device.

An embodiment of the present disclosure further provides a storage medium having stored an executable program that, when executed by a processor, causes the processor to perform the method for determining power-saving information performed by the network device.

An embodiment of the present disclosure further provides a computer program product including computer program instructions, and the computer program instructions cause a computer to perform the method for determining power-saving information performed by the terminal device.

An embodiment of the present disclosure further provides a computer program product including computer program instructions, and the computer program instructions cause a computer to perform the method for determining power-saving information performed by the network device.

An embodiment of the present disclosure further provides a computer program causing a computer to perform the method for determining power-saving information performed by the terminal device.

An embodiment of the present disclosure further provides a computer program causing a computer to perform the method for determining power-saving information performed by the network device.

FIG. 15 is a schematic diagram of a hardware composition structure of an electronic device (a terminal device or a network device) provided by an embodiment of the present disclosure. The electronic device 700 includes at least one processor 701, a memory 702 and at least one network interface 704. The various components in the electronic device 700 are coupled together by a bus system 705. It can be understood that the bus system 705 is used to implement connection communications between these components. The bus system 705 includes, in addition to a data bus, a power bus, a control bus and a status signal bus. However, the various buses are designated as the bus system 705 in FIG. 15 for clarity.

It should be understood that the memory 702 may be a volatile memory or a non-volatile memory and may also include the both. The non-volatile memory may be a read-only memory (ROM), a programmable read-only memory (PROM), an erasable programmable read-only memory (EPROM), an electrically erasable programmable read-only memory (EEPROM), a magnetic random access memory (FRAM), a flash memory, a magnetic surface memory, an optical disk, or a compact disc read-only memory (CD-ROM). The magnetic surface memory may be a disk storage or a magnetic tape memory. The volatile memory may be a random access memory (RAM) which serves as an external cache. By way of an illustration, but not a limitation, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), a direct memory bus random access memory (DRRAM). The memory 702 described in the embodiments of the present disclosure is intended to include but not limited to these and any other suitable types of memory.

The memory 702 in the embodiments of the present disclosure is used to store various types of data to support the operations of the electronic device 700. Examples of such data include any computer program for operation on the electronic device 700, such as an application program 7022. A program for implementing the method of the embodiments of the present disclosure may be included in the application program 7022.

The methods disclosed in the above embodiments of the present disclosure may be applied to or implemented by the processor 701. The processor 701 may be an integrated circuit chip having a signal processing capability. In an implementation, the operations of the method may be accomplished by an integrated logic circuitry of the hardware in the processor 701 or instructions in a form of software. The processor 701 may be a common processor, a digital signal processor (DSP) or other programmable logic devices, discrete gate or transistor logic devices, discrete hardware components or the like. The processor 701 may implement or perform the methods, operations and logic diagrams disclosed in the embodiments of the present disclosure. The common processor can be a microprocessor or any conventional processor. The operations of the method disclosed in the embodiments of the present disclosure can be directly embodied as a completion of an execution of the hardware decoding processor or the completion of the combined execution of the hardware and the software module in the decoding processor. The software module may be located in a storage medium in the memory 702, and the processor 701 reads the information in the memory 702 to complete the operations of the method in conjunction with its hardware.

In an exemplary embodiment, the electronic device 700 may be implemented by one or more application specific integrated circuit (ASIC), DSP, programmable logic device (PLD), complex programmable logic device (CPLD), FPGA, common processor, controller, MCU, MPU, or other electronic components for performing the methods.

The present disclosure is described with reference to flowcharts and/or block diagrams of the methods, apparatus (systems) and computer program products according to the embodiments of the present disclosure. It should be understood that each workflow and/or block in the flowcharts and/or the block diagrams, as well as the combinations of the workflows and/or blocks in the flowcharts and/or the block diagrams, may be implemented by computer program instructions. These computer program instructions may be provided to a processor of a common computer, a special purpose computer, an embedded processor, or other programmable data processing device to generate a machine, such that the instructions executed by the processor of the computer or other programmable data processing device generate an apparatus for performing the functions specified in one or more workflows of the flowcharts and/or one or more blocks of the block diagram.

These computer program instructions may also be stored in a computer-readable memory capable of directing a computer or other programmable data processing device to operate in a specific manner such that the instructions stored in the computer-readable memory produce an manufacture comprising instruction apparatus that perform the functions specified in one or more workflows of the flowcharts and/or one or more blocks of the block diagrams.

These computer program instructions may also be loaded on a computer or other programmable data processing device such that a series of operations are executed on the computer or other programmable device to produce a computer-implemented processing, such that the instructions executed on the computer or other programmable device provide operations for implementing the functions specified in one or more workflows of the flowcharts and/or one or more blocks of the block diagrams.

It should be understood that the terms "system" and "network" in the present disclosure are generally used interchangeably herein. In the present disclosure, the term "and/or" is merely used to describe an association relationship between the associated objects and represents that there may be three relationships, for example, A and/or B may represent that there are three situations: A exists alone, A and B exist at the same time, and B exist alone. In addition, the character "/" in the present disclosure generally represents that the associated objects have an "or" relationship.

The foregoing are only preferred embodiments of the present disclosure, and are not intended to limit the scope of protection of the present disclosure. All modifications, equivalent replacements and improvements made within the spirit and principles of the present disclosure shall be included in the scope of protection of the present disclosure.

**Claims**

1. A method for determining power-saving information, comprising:
   determining, by a terminal device, a size of bit fields for indicating power-saving information in downlink control information based on at least one of:

   information of terminal device groups corresponding to the power-saving information;
   information of paging occasions corresponding to the power-saving information; or
   first configuration information transmitted by a network device.

2. The method of claim 1, wherein the information of the terminal device groups corresponding to the power-saving information comprises at least one of:

   a number of the terminal device groups corresponding to the power-saving information; or
   a bit field size of the power-saving information corresponding to each of the terminal device groups.

3. The method of claim 2, wherein the size of the bit fields for indicating the power-saving information is a sum of bit field sizes of the power-saving information corresponding to all of the terminal device groups.

4. The method of claim 2 or 3, wherein the power-saving information corresponding to each of the terminal device groups has a same bit field size; or
   the power-saving information corresponding to each of the terminal device groups has a different bit field size.

5. The method of claim 1, wherein the information of the paging occasions comprises:
   a number of the paging occasions, or a number of paging occasion groups.

6. The method of claim 1 or 5, wherein the size of the bit fields for indicating the power-saving information is related to a number of the paging occasions or a number of paging occasion groups corresponding to the power-saving information.

7. The method of any one of claims 1, 5 and 6, wherein

   one bit field of the power-saving information corresponding to each terminal device group corresponds to one paging occasion or one paging occasion group; or
   one bit field of the power-saving information corresponding to each terminal device group corresponds to at least two paging occasions or at least two paging occasion groups; or
   at least two bit fields of the power-saving information corresponding to each terminal device group correspond to one paging occasion or one paging occasion group.

8. The method of any one of claims 1, 5 and 6, wherein

   one bit field of the power-saving information corresponds to one paging occasion or one paging occasion group; or
   one bit field of the power-saving information corresponds to at least two paging occasions or at least two paging occasion groups; or

at least two bit fields of the power-saving information correspond to one paging occasion or one paging occasion group.

9. The method of any one of claims 1 to 8, wherein the paging occasions corresponding to the power-saving information are determined by second configuration information transmitted by the network device; or
the paging occasions corresponding to the power-saving information are indicated by the downlink control information.

10. The method of any one of claims 1 to 9, wherein the information of the paging occasions corresponding to the power-saving information is determined by the network device.

11. The method of any one of claims 1 to 10, wherein the downlink control information comprises control information for indicating only the power-saving information.

12. The method of any one of claims 1 to 10, wherein the downlink control information comprises control information for further indicating first information, the first information being different from the power-saving information.

13. The method of claim 12, wherein the first information comprises one of:
paging indication information, scheduling information of system information, system information changing indication, or a paging short message.

14. The method of claim 12 or 13, wherein the downlink control information comprises reserved bit fields, part or all of the reserved bit fields are used to indicate the power-saving information; or
unused bit fields in the downlink control information are used to indicate the power-saving information.

15. The method of any one of claims 12 to 14, wherein the first information comprises a short message information field, and wherein

a first bit field in the short message information field is used to indicate the power-saving information; or
a second bit field in the short message information field is used to indicate the power-saving information.

16. The method of any one of claims 1 to 15, wherein the power-saving information indicates whether the terminal device receives a paging message at a target paging occasion before the target paging occasion arrives.

17. The method of any one of claims 1 to 16, wherein the downlink control information has a downlink control information format of DCI format 1-0, or DCI format 2-6.

18. The method of any one of claims 1 to 17, further comprising:
determining, by the terminal device, a position of the power-saving information in the downlink control information.

19. A method for determining power-saving information, comprising:

transmitting, by a network device, second information for a terminal device to determine a size of bit fields for indicating power-saving information in downlink control information, to the terminal device,
wherein the second information comprises at least one of:

information of terminal device groups corresponding to the power-saving information;
information of paging occasions corresponding to the power-saving information; or
first configuration information.

20. The method of claim 19, wherein the information of the terminal device groups corresponding to the power-saving information comprises at least one of:

a number of the terminal device groups corresponding to the power-saving information; or
a bit field size of the power-saving information corresponding to each of the terminal device groups.

21. The method of claim 20, wherein the size of the bit fields for indicating the power-saving information is a sum of bit field sizes of the power-saving information corresponding to all of the terminal device groups.

22. The method of claim 20 or 21, wherein the power-saving information corresponding to each of the terminal device groups has a same bit field size; or
the power-saving information corresponding to each of the terminal device groups has a different bit field size.

23. The method of claim 19, wherein the information of the paging occasions comprises:
a number of the paging occasions, or a number of paging occasion groups.

24. The method of claim 19 or 23, wherein the size of the bit fields for indicating the power-saving information is related to a number of the paging occasions or a number of paging occasion groups corresponding to the power-saving information.

25. The method of any one of claims 19, 23 and 24, wherein

one bit field of the power-saving information corresponding to each terminal device group corresponds to one paging occasion or one paging occasion group; or
one bit field of the power-saving information corresponding to each terminal device group corresponds to at least two paging occasions or at least two paging occasion groups; or
at least two bit fields of the power-saving information corresponding to each terminal device group correspond to one paging occasion or one paging occasion group.

26. The method of any one of claims 19, 23 and 24, wherein

one bit field of the power-saving information corresponds to one paging occasion or one paging occasion group; or
one bit field of the power-saving information corresponds to at least two paging occasions or at least two paging occasion groups; or
at least two bit fields of the power-saving information correspond to one paging occasion or one paging occasion group.

27. The method of any one of claims 19 to 26, wherein the paging occasions corresponding to the power-saving information are determined by second configuration information transmitted by the network device; or
the paging occasions corresponding to the power-saving information are indicated by the downlink control information.

28. The method of any one of claims 19 to 27, wherein the information of the paging occasions corresponding to the power-saving information is determined by the network device.

29. The method of any one of claims 19 to 28, wherein the downlink control information comprises control information for indicating only the power-saving information.

30. The method of any one of claims 19 to 28, wherein the downlink control information comprises control information for further indicating first information, the first information being different from the power-saving information.

31. The method of claim 30, wherein the first information comprises one of:
paging indication information, scheduling information of system information, system information changing indication, or a paging short message.

32. The method of claim 30 or 31, wherein the downlink control information comprises reserved bit fields, part or all of the reserved bit fields are used to indicate the power-saving information; or
unused bit fields in the downlink control information are used to indicate the power-saving information.

33. The method of any one of claims 30 to 32, wherein the first information comprises a short message information field, and wherein

a first bit field in the short message information field of the first information is used to indicate the power-saving information; or
a second bit field in the short message information field of the first information is used to indicate the power-saving information.

34. The method of any one of claims 19 to 33, wherein the power-saving information indicates whether the terminal device receives a paging message at a target paging occasion before the target paging occasion arrives.

35. The method of any one of claims 19 to 34, wherein the downlink control information has a downlink control information format of DCI format 1-0, or DCI format 2-6.

36. A terminal device, comprising:
a processing unit, configured to determine a size of bit fields for indicating power-saving information in downlink control information based on at least one of:

information of terminal device groups corresponding to the power-saving information;
information of paging occasions corresponding to the power-saving information; or
first configuration information transmitted by a network device.

37. The terminal device of claim 36, wherein the information of the terminal device groups corresponding to the power-saving information comprises at least one of:

a number of the terminal device groups corresponding to the power-saving information; or
a bit field size of the power-saving information corresponding to each of the terminal device groups.

38. The terminal device of claim 37, wherein the size of the bit fields for indicating the power-saving information is a sum of bit field sizes of the power-saving information corresponding to all of the terminal device groups.

39. The terminal device of claim 37 or 38, wherein the power-saving information corresponding to each of the terminal device groups has a same bit field size; or
the power-saving information corresponding to each of the terminal device groups has a different bit field size.

40. The terminal device of claim 36, wherein the information of the paging occasions comprises:
a number of the paging occasions, or a number of paging occasion groups.

41. The terminal device of claim 36 or 40, wherein the size of the bit fields for indicating the power-saving information is related to a number of the paging occasions or a number of paging occasion groups corresponding to the power-saving information.

42. The terminal device of any one of claims 36, 40 and 41, wherein

one bit field of the power-saving information corresponding to each terminal device group corresponds to one paging occasion or one paging occasion group; or
one bit field of the power-saving information corresponding to each terminal device group corresponds to at least two paging occasions or at least two paging occasion groups; or
at least two bit fields of the power-saving information corresponding to each terminal device group correspond to one paging occasion or one paging occasion group.

43. The terminal device of any one of claims 36, 40 and 41, wherein

one bit field of the power-saving information corresponds to one paging occasion or one paging occasion group; or
one bit field of the power-saving information corresponds to at least two paging occasions or at least two paging occasion groups; or
at least two bit fields of the power-saving information correspond to one paging occasion or one paging occasion group.

44. The terminal device of any one of claims 36 to 43, wherein the paging occasions corresponding to the power-saving information are determined by second configuration information transmitted by the network device; or
the paging occasions corresponding to the power-saving information are indicated by the downlink control information.

45. The terminal device of any one of claims 36 to 44, wherein the information of the paging occasions corresponding to the power-saving information is determined by the network device.

**46.** The terminal device of any one of claims 36 to 45, wherein the downlink control information comprises control information for indicating only the power-saving information.

**47.** The terminal device of any one of claims 36 to 45, wherein the downlink control information comprises control information for further indicating first information, the first information being different from the power-saving information.

**48.** The terminal device of claim 47, wherein the first information comprises one of:
paging indication information, scheduling information of system information, system information changing indication, or a paging short message.

**49.** The terminal device of claim 47 or 48, wherein the downlink control information comprises reserved bit fields, part or all of the reserved bit fields are used to indicate the power-saving information; or
unused bit fields in the downlink control information are used to indicate the power-saving information.

**50.** The terminal device of any one of claims 47 to 49, wherein the first information comprises a short message information field, and wherein

a first bit field in a short message information field of the first information is used to indicate the power-saving information; or
a second bit field in a short message information field of the first information is used to indicate the power-saving information.

**51.** The terminal device of any one of claims 47 to 50, wherein the power-saving information indicates whether the terminal device receives a paging message at a target paging occasion before the target paging occasion arrives.

**52.** The terminal device of any one of claims 47 to 51, wherein the downlink control information has a downlink control information format of DCI format 1-0, or DCI format 2-6.

**53.** The terminal device of any one of claims 36 to 52, wherein the processing unit is further configured to determine a position of the power-saving information in the downlink control information.

**54.** A network device, comprising:

a transmitting unit, configured to transmit second information for a terminal device to determine a size of bit fields for indicating power-saving information in downlink control information, to the terminal device, wherein the second information comprises at least one of:

information of terminal device groups corresponding to the power-saving information;
information of paging occasions corresponding to the power-saving information; or
first configuration information.

**55.** The network device of claim 54, wherein the information of the terminal device groups corresponding to the power-saving information comprises at least one of:

a number of the terminal device groups corresponding to the power-saving information; or
a bit field size of the power-saving information corresponding to each of the terminal device groups.

**56.** The network device of claim 55, wherein the size of the bit fields for indicating the power-saving information is a sum of bit field sizes of the power-saving information corresponding to all of the terminal device groups.

**57.** The network device of claim 55 or 56, wherein the power-saving information corresponding to each of the terminal device groups has a same bit field size; or
the power-saving information corresponding to each of the terminal device groups has a different bit field size.

**58.** The network device of claim 54, wherein the information of the paging occasions comprises:
a number of the paging occasions, or a number of paging occasion groups.

**59.** The network device of claim 54 or 58, wherein the size of the bit fields for indicating the power-saving information is related to a number of the paging occasions or a number of paging occasion groups corresponding to the power-saving information.

**60.** The network device of any one of claims 54, 58 and 59, wherein

one bit field of the power-saving information corresponding to each terminal device group corresponds to one paging occasion or one paging occasion group; or
one bit field of the power-saving information corresponding to each terminal device group corresponds to at least two paging occasions or at least two paging occasion groups; or
at least two bit fields of the power-saving information corresponding to each terminal device group correspond to one paging occasion or one paging occasion group.

**61.** The network device of any one of claims 54, 58 and 59, wherein

one bit field of the power-saving information corresponds to one paging occasion or one paging occasion group; or
one bit field of the power-saving information corresponds to at least two paging occasions or at least two paging occasion groups; or
at least two bit fields of the power-saving information correspond to one paging occasion or one paging occasion group.

**62.** The network device of any one of claims 54 to 61, wherein the paging occasions corresponding to the power-saving information are determined by second configuration information transmitted by the network device; or
the paging occasions corresponding to the power-saving information are indicated by the downlink control information.

**63.** The network device of any one of claims 54 to 62, wherein the information of the paging occasions corresponding to the power-saving information is determined by the network device.

**64.** The network device of any one of claims 54 to 63, wherein the downlink control information comprises control information for indicating only the power-saving information.

**65.** The network device of any one of claims 54 to 63, wherein the downlink control information comprises control information for further indicating first information, the first information being different from the power-saving information.

**66.** The network device of claim 65, wherein the first information comprises one of:
paging indication information, scheduling information of system information, system information changing indication, or a paging short message.

**67.** The network device of claim 65 or 66, wherein the downlink control information comprises reserved bit fields, part or all of the reserved bit fields are used to indicate the power-saving information; or
unused bit fields in the downlink control information are used to indicate the power-saving information.

**68.** The network device of any one of claims 54 to 67, wherein the first information comprises a short message information field, and wherein

a first bit field in the short message information field of the first information is used to indicate the power-saving information; or
a second bit field in the short message information field of the first information is used to indicate the power-saving information.

**69.** The network device of any one of claims 54 to 68, wherein the power-saving information indicates whether the terminal device receives a paging message at a target paging occasion before the target paging occasion arrives.

**70.** The network device of any one of claims 54 to 69, wherein the downlink control information has a downlink control information format of DCI format 1-0, or DCI format 2-6.

71. A terminal device comprising a processor and a memory for storing a computer program capable of running on the processor, wherein
the processor is configured to perform the operations of the method for determining power-saving information of any one of claims 1 to 18 when running the computer programs.

72. A network device comprising a processor and a memory for storing computer programs capable of running on the processor, wherein
the processor is configured to perform the operations of the method for determining power-saving information of any one of claims 19 to 35 when running the computer programs.

73. A storage medium having stored an executable program that, when executed by a processor, causes the processor to perform the method for determining power-saving information of any one of claims 1 to 18.

74. A storage medium having stored an executable program that, when executed by a processor, causes the processor to perform the method for determining power-saving information of any one of claims 19 to 35.

75. A computer program product comprising computer program instructions, wherein the computer program instructions cause a computer to perform the method for determining power-saving information of any one of claims 1 to 18.

76. A computer program product comprising computer program instructions, wherein the computer program instructions cause a computer to perform the method for determining power-saving information of any one of claims 19 to 35.

77. A computer program causing a computer to perform the method for determining power-saving information of any one of claims 1 to 18.

78. A computer program causing a computer to perform the method for determining power-saving information of any one of claims 19 to 35.

79. A chip, comprising:
a processor, configured to call and run a computer program from a memory, to cause a device on which the chip is installed to perform the method for determining power-saving information of any one of claims 1 to 18.

80. A chip, comprising:
a processor, configured to call and run a computer program from a memory, to cause a device on which the chip is installed to perform the method for determining power-saving information of any one of claims 19 to 35.

FIG. 1

FIG. 2

FIG. 3

**DRX cycle**

PF

PO

**FIG. 4**

Power-saving
signal indicates
to monitor
PDCCH

Power-saving
signal indicates
not to monitor
PDCCH

Power-saving
signal indicates
to monitor
PDCCH

Paging
occasion or
paging frame

Paging
occasion or
paging frame

Paging
occasion or
paging frame

**FIG. 5**

**100**

110

120

120

**FIG. 6**

A terminal device determines a size of bit fields for indicating power-saving information in downlink control information based on at least one of: information of terminal device groups corresponding to the power-saving information, information of paging occasions corresponding to the power-saving information, or first configuration information transmitted by a network device

S201

The terminal device determines a position of the power-saving information in the downlink control information

S202

**FIG. 7**

Power-saving information

| Terminal device group 1 | Terminal device group 2 | ... | Terminal device group N | CRC(PPS-RNTI) |

**FIG. 8**

Power-saving signal indicates not monitor PDCCH

Paging occasion or paging frame

Paging occasion or paging frame

Paging occasion or paging frame

**FIG. 9**

First bit field of the power-saving information    Paging occasion corresponding to the first bit field      Pth bit field of the power-saving information    Paging occasion corresponding to the Pth bit field

Terminal device group 1    Terminal device group 2      Terminal device group P

**FIG. 10**

First bit ... Sixth bit

Terminal device group 1    Terminal device group 2      Terminal device group N

**FIG. 11**

A network device transmits second information for a terminal device to determine a size of bit fields for indicating power-saving information in downlink control information, to the terminal device; the second information includes at least one of: information of terminal device groups corresponding to the power-saving information, information of paging occasions corresponding to the power-saving information, or first configuration information    S301

**FIG. 12**

Terminal device 600

Processing unit 601

**FIG. 13**

Network device 800

Transmitting unit 801

## FIG. 14

Electronic device 700

Processor 701

705

Memory 702

Application program 7022

Network interface 704

## FIG. 15

## INTERNATIONAL SEARCH REPORT

International application No.

**PCT/CN2021/075552**

### A. CLASSIFICATION OF SUBJECT MATTER

H04W 52/02(2009.01)i; H04W 68/00(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; OETXT; 3GPP: 寻呼时机, 寻呼机会, 节能, 寻呼指示, 分组, 比特, 下行控制信息, paging occasion, PO, power saving, DCI, bit, group

### C. DOCUMENTS CONSIDERED TO BE RELEVANT

| Category* | Citation of document, with indication, where appropriate, of the relevant passages | Relevant to claim No. |
|---|---|---|
| X | CN 112118615 A (HUAWEI TECHNOLOGIES CO., LTD.) 22 December 2020 (2020-12-22) description paragraphs [0151]-[0249], [0300]-[0317] | 1-80 |
| X | CN 111356216 A (HUAWEI TECHNOLOGIES CO., LTD.) 30 June 2020 (2020-06-30) description paragraphs [0003]-[0195 | 1-80 |
| X | CN 110972083 A (HUAWEI TECHNOLOGIES CO., LTD.) 07 April 2020 (2020-04-07) description paragraphs [0003]-[0131 | 1-80 |
| A | CN 109286966 A (VIVO COMMUNICATION TECHNOLOGY CO., LTD.) 29 January 2019 (2019-01-29) entire document | 1-80 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2021** | **21 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 274 314 A1

## INTERNATIONAL SEARCH REPORT
### Information on patent family members

International application No.

**PCT/CN2021/075552**

| Patent document cited in search report | | | Publication date (day/month/year) | Patent family member(s) | | | Publication date (day/month/year) |
|---|---|---|---|---|---|---|---|
| CN | 112118615 | A | 22 December 2020 | WO | 2020253581 | A1 | 24 December 2020 |
| CN | 111356216 | A | 30 June 2020 | WO | 2020135019 | A1 | 02 July 2020 |
| CN | 110972083 | A | 07 April 2020 | US | 2021219263 | A1 | 15 July 2021 |
| | | | | WO | 2020063928 | A1 | 02 April 2020 |
| | | | | BR | 112021004860 | A2 | 01 June 2021 |
| | | | | EP | 3843429 | A1 | 30 June 2021 |
| | | | | IN | 202147010544 | A | 02 April 2021 |
| CN | 109286966 | A | 29 January 2019 | US | 2021168759 | A1 | 03 June 2021 |
| | | | | WO | 2019015459 | A1 | 24 January 2019 |
| | | | | EP | 3657864 | A1 | 27 May 2020 |
| | | | | EP | 3657864 | A4 | 05 August 2020 |
| | | | | CN | 109286966 | B | 04 August 2020 |

Form PCT/ISA/210 (patent family annex) (January 2015)